# EUROPÄISCHE PATENTANMELDUNG

(11) **EP 0 626 441 A1**
(43) Veröffentlichungstag der Anmeldung: **30.11.1994**
(21) Anmeldenummer: 93108389.3
(22) Anmeldetag: 25.05.1993
(51) Int. Cl.: C10G 45/16, B01J 8/08

(54) **Reaktor zur Durchführung endothermer oder schwach exothermer Reaktionen**

(71) Anmelder: Klein, Wolfdieter, D-45665 Recklinghausen (DE)
(72) Erfinder: Klein, Wolfdieter, D-45665 Recklinghausen (DE)
(74) Vertreter: Thiel, Christian, Dr. Dipl.-Chem.

(57) **Zusammenfassung**

Reaktor zur Durchführung endothermer oder schwach exothermer Reaktionen, insbesondere zur Behandlung von kontaminierten flüssigen, verflüssigbaren und/oder festen Kohlenwasserstoffen und Kohlenwasserstoffverbindungen mit Wasserstoff, mit wenigstens einer Zuführung für zu behandelndes Substrat (5), wasserstoffhaltiges Reagenz (7) und ggf. Katalysator, einem Druckbehälter (14), Einrichtungen zum Beheizen (8) und zur Überwachung der Betriebsparameter sowie eine Ableitung für behandeltes Substrat (10), bei dem die Innenwandung des Druckbehälters (9) zumindest teilweise aus zu einem Heizmantel (19) miteinander verbundenen Rohren (16) besteht, der wenigstens eine Zuleitung (8a) und wenigstens eine Ableitung (8b) für ein Heizmedium aufweist.

## Beschreibung

Die Erfindung betrifft einen Reaktor für endotherme oder schwach exotherme chemische Reaktionen, insbesondere zur Behandlung von kontaminierten flüssigen, verflüssigbaren und/oder festen Kohlenwasserstoffen und Kohlenwasserstoffverbindungen mit Wasserstoff, mit wenigstens einer Zuführung für zu behandelndes Substrat, wasserstoffhaltiges Reagenz und ggf. Katalysator, einem Druckbehälter, Einrichtungen zum Beheizen und zur Überwachung der Betriebsparameter sowie eine Ableitung für behandeltes Substrat. Ein solcher Reaktor ist besonders zur Behandlung hydrierfähiger Substrate mit Wasserstoff, die eine negative oder nur schwach positive Wärmetönung ergeben, geeignet.

Reaktoren zur Behandlung von hydrierfähigen Substraten mit Wasserstoff sind bekannt. Solche Reaktoren müssen temperatur- und druckbeständig sein, da Hydrierreaktionen von hohen Temperaturen und Wasserstoffdrücken begünstigt werden. Da die Hydrierung organischer Substanzen in der Regel stark exotherm verläuft, ist die Beheizung derartiger Reaktoren nicht erforderlich: Tatsächlich wird eine effektive Kühlung zur Abführung der Reaktionswärme benötigt. Eine Beheizung ist allenfalls im Anfangsstadium erforderlich, um die gewünschte Betriebstemperatur zu erreichen.

Bei der hydrierenden Behandlung von Kunststoffabfällen hat sich jedoch gezeigt, daß die bei der Wasserstoffaufnahme freigesetzte Wärme nicht ausreicht, das zur Hydrierung erforderliche Temperaturniveau zu halten. Praktisch muß bei solchen Reaktionen Wärme zugeführt werden, um den Wärmeverlust über die Wandung auszugleichen. So wurde für ein Reaktorrohr mit einem äußeren Durchmesser von 1400 mm und einer Länge von 11000 mm ein zusätzlicher Energiebedarf von 300 bis 400 kW festgestellt, der entweder direkt über das zu behandelnde Substrat oder indirekt über Beheizungsmaßnahmen zugeführt werden muß. Aufgrund der bei solchen Reaktoren üblichen Außenwärmeisolierung und feuerfesten Innenauskleidung innen ist eine Beheizung von außen problematisch. Die Aufheizung des Substrats weit über das zur Hydrierung erforderliche Energieniveau führt zu unkontrollierbaren und unerwünschten Nebenreaktionen, die das Produkt entwerten können. Insoweit bleibt nur die Beheizung von innen.

Andere Reaktionen insbesondere der Mineralölverarbeitung und -veredlung sind endotherm (reforming) und bedürfen einer zusätzlichen Heizung.

Aus EP-A-0 534 046 ist ein Verfahren zur Behandlung von Kunststoffabfällen bekannt. Die dort beschriebene Anlage weist einen zentralen Reaktor auf, in dem das angemaischte kunststoffhaltige Produkt mit Wasserstoff zur Reaktion gebracht wird. Die angemaischten Kunststoffabfälle werden mit Wasserstoff versetzt und dem Reaktor unter gemeinsamer Aufheizung zugeführt. Die Aufheizung kann nach diesem Verfahren durch indirekten Wärmeaustausch mit einem Wärmeträger vorgenommen werden. Einzelheiten hierzu sind nicht genannt.

Gemäß EP-A-0 534 046 ist es ferner möglich, einen von außen Temperatur geregelten Rohrreaktor zu verwenden, bei dem die Wärmeübertragung über ein Flüssigmetallbett, eine Salzschmelze oder über organische Wärmeträgeröle von außen erfolgt. Auch hier gilt die oben bereits angesprochene Problematik der indirekten Beheizung.

Der Erfindung liegt daher die Aufgabe zugrunde, einen Reaktor zu schaffen, mit dem die zur Hydrierung von unter einer nur wenig positiven oder negativen Wärmetönung ablaufenden Hydrierreaktionen erforderliche Energie im Reaktor selbst bereitgestellt werden kann, wobei ein Temperaturniveau im Bereich von 350 bis 600° C bei einem Druck von bis zu 500 bar gehalten werden kann.

Diese Aufgabe wird mit einem Reaktor der eingangs beschriebenen Art gelöst, bei dem die Innenwandung des Druckbehälters zumindest teilweise aus zu einem Heizmantel miteinander verbundenen Rohren besteht, der wenigstens eine Zuleitung und wenigstens eine Ableitung für ein Heizmedium aufweist.

Der erfindungsgemäße Reaktor, der insbesondere ein Rohrreaktor ist, erlaubt die direkte Wärmezufuhr an den Reaktionsort, ohne daß die Wärmeübertragung durch die bei derartigen Reaktoren vorhandene und notwendige Auskleidung und Dämmung beeinträchtigt wird. Die erfindungsgemäß verwandten Rohre aus unter den im Reaktor herrschenden Bedingungen stabilen Metallegierungen, insbesondere Stahl, haben gute Wärmeübergangswerte und sorgen für eine gleichmäßige Wärmeverteilung.

Bei den erfindungsgemäß zum Einsatz kommenden Rohren handelt es sich vorzugsweise um Vierkanthohlprofile mit rechteckigem oder quadratischem Außenquerschnitt und einem innen kreisförmig oder oval ausgebildeten Durchlaß für das Heizmedium. Ein solches Vierkantrohr kann bei größeren Längen wie ein Schlauch zu einem Heizmantel mit aneinanderliegenden und umlaufenden Windungen gewickelt werden. Geeignet sind ferner Halbschalenrohre oder Rohre mit rundem oder ovalem Querschnitt.

Vorzugsweise weist der erfindungsgemäße Reaktor eine entlang der Innenwandung des Druckbehälters aufgewickelte Rohrschlange auf, deren Wicklungen senkrecht zur Strömungsrichtung des zu behandelnden Substrats verlaufen. Das Heizmedium wird über Eintritts- und Austrittsstutzen, vorzugsweise an den Enden des Reaktors, zu- und abgeführt. Dabei kann es zweckmäßig sein, über die Länge des Reaktors segmentweise mehrere Zu- und Ableitungen für das Heizmedium vorzusehen, um dem Wärmebedarf des Reaktors in seinen einzelnen Abschnitten Rechnung zu tragen oder auch um einen für die Reaktion vorteilhaften Temperaturgradienten zu schaffen. Es ist naturgemäß auch möglich, die Rohre parallel zur Innenwand längs durch den Reaktor zu führen, vorzugsweise im Gegenstrom.

Zweckmäßigerweise sind die den Heizmantel bildenden Rohre durch Schweißnähte miteinander verbunden. Diese Schweißnähte wie auch die Heizmanteloberfläche können insbesondere bei der Verwendung von Vierkantrohren zur Innenseite des Reaktors hin geglättet sein, um Anlagerungen zu erschweren. Auf der Außenseite des so hergestellten Rohrschlangensystems sind die Windungen vorzugsweise durch eine unterbrochene äußere tragende Naht miteinander verbunden. Bei der Verwendung von Rohren mit ovalem Querschnitt sind diese an ihren stärker gekrümmten Flanken miteinander verbunden.

Die Wicklungen des Heizmantels auf der Innenseite können ohne Unterbrechnung miteinander verschweißt sein, so daß die innere Schweißnaht als Dichtnaht ausgebildet ist. Bevorzugt ist jedoch eine Ausbildung dergestalt, daß der Heizmantel druckdurchlässig ist, d. h. den Innendruck des Reaktors an die Wandung des Druckgefäßes weitergibt. Es versteht sich, daß die einzelnen Rohre selbst gegen den im Reaktorinneren herrschenden hohen Druck beständig sind. Als Heizmedien kommen übliche Wärmeträger in Frage, etwa organische Wärmeträger, Salzlösungen oder -schmelzen, hoch gespannter Wasserdampf, Rauchgas oder Flüssigmetall.

Als Heizmedium für das Rohrsystem ist eine Salzschmelze besonders geeignet, die mit einer Temperatur von 350 bis 600° C und vorzugsweise 400 bis 550° C hindurchgeführt wird. Der Betriebsdruck ist dergestalt, daß er zur Erzeugung eines hinreichend starken Stroms des Heizmediums ausreicht.

Zur Anpassung der Rohrschlange an die innere Geometrie des Reaktors kann es insbesondere bei Vierkantrohren zweckmäßig sein, die einzelnen Windungen gegeneinander zu versetzen und eine Glättung der Oberfläche durch Anschleifen herbeizuführen. Es kann ferner zweckmäßig sein, das Rohr in einigen Bereichen auf Abstand zu wickeln und an den Reaktorenden Freiraum zu lassen, um einen Dehnungsausgleich bei verschiedenen Temperaturzuständen des Reaktors zu ermöglichen.

Besonders bevorzugt ist ein Reaktor, bei dem sich an die äußere druckfeste Reaktorwand zunächst eine wärmedämmende und inerte Auskleidung anschließt, an die der Heizmantel aus aneinandergewickelten Rohren anschließt. Auf diese Weise wird die Wärme direkt in den Reaktionsraum abgegeben, jedoch eine Isolierung der Druckbehälterwand erreicht. Bei druckdurchlässiger Gestaltung des Heizmantels muß der Druckbehälter somit im wesentlichen nur dem Reaktordruck standhalten, während eine weitgehende Temperaturentlastung gegeben ist.

Die Erfindung wird durch die beiliegenden Abbildungen näher erläutert. Von diesen zeigt
- Fig. 1: schematisch den Ablauf eines Verfahrens zur Behandlung von Kunststoffabfällen mit Wasserstoff;
- Fig. 2: einen Längsschnitt durch einen erfindungsgemäßen Reaktor, wie er in dem in Fig. 1 gezeigten Verfahren zum Einsatz kommen kann;
- Fig. 3: im Detail den Wandaufbau des Reaktors gemäß Fig. 2;
- Fig. 4: im Detail den Aufbau des Heizmantels aus parallel verlaufenden Vierkantrohren im Reaktor gemäß Fig. 2;
- Fig. 5: im Detail den Aufbau des Heizmantels aus versetzt zueinander verlaufenden Vierkantrohren;
- Fig. 6: im Detail den Aufbau des Heizmantels aus parallel verlaufenden Rundrohren;
- Fig. 7: im Detail den Aufbau des Heizmantels aus Halbschalenrohren und
- Fig. 8: im Detail den Aufbau des Heizmantels aus Ovalrohren.

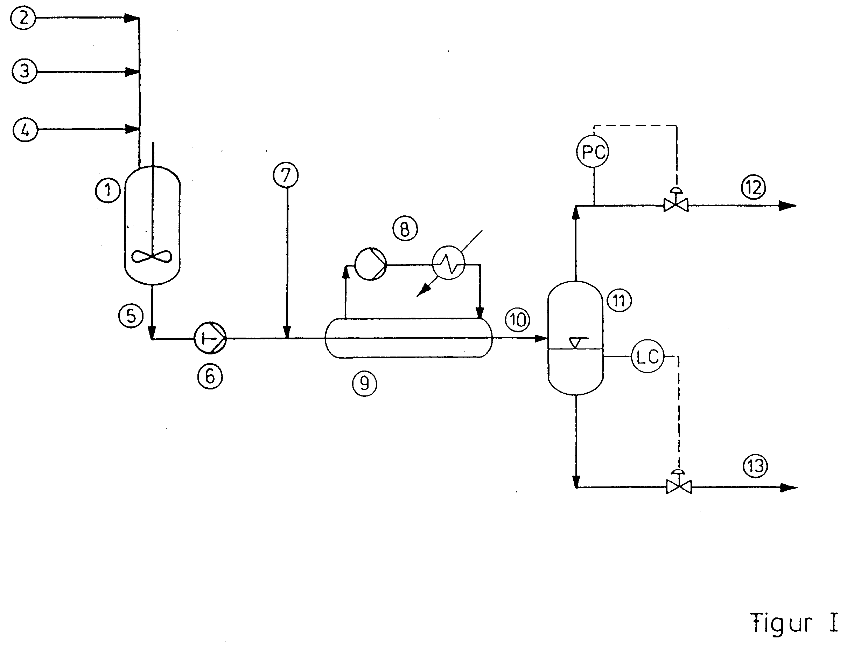

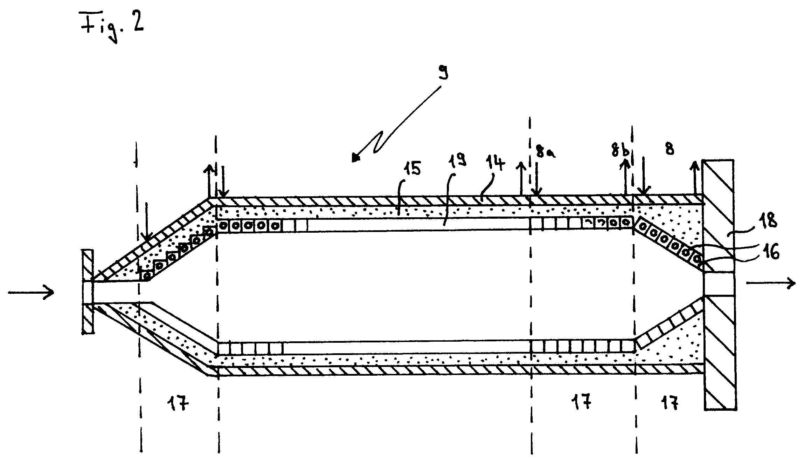

Das in Fig. 1 schematisch dargestellte Verfahren kann zur Behandlung von Kunststoffabfällen mit Wasserstoff verwandt werden, beispielsweise gemäß EP-A-0 534 046. Im Vorlagebehälter 1 wird der Einsatzstoff 2 mit Katalysator 3 und Zuschlagsstoffen 4 vermischt und das Gemisch über die Leitung 5 der Pumpe 6 zugeführt. Diese drückt das Gemisch auf Reaktionsdruck. Danach wird dem Gemisch Wasserstoff mittels Leitung 7 zugemischt, und es erfolgt eine gemeinsame Aufheizung auf Reaktionstemperatur. Die Aufheizung wird durch indirekten Wärmeaustausch des Reaktionsgemisches mit einem Wärmeträgersystem 8 durchgeführt.

Im Reaktor 9 erfolgt die thermisch-katalytische Behandlung des Reaktionsgemisches. Diese wird durch die Anwesenheit des Katalysators gefördert. Das erzeugte Produkt wird mittels Leitung 10 einem Trennbehälter 11 zugeführt. In diesem werden die Gase von der Flüssigkeit mit Feststoffen abgetrennt. Die Gase werden über Leitung 12 druckgeregelt abgeführt.

Das im Sumpf des Trennbehälters 11 abgezogene Produkt mit Feststoffen wird über die Leitung 13 standgeregelt der weiteren Verarbeitung zugeführt.

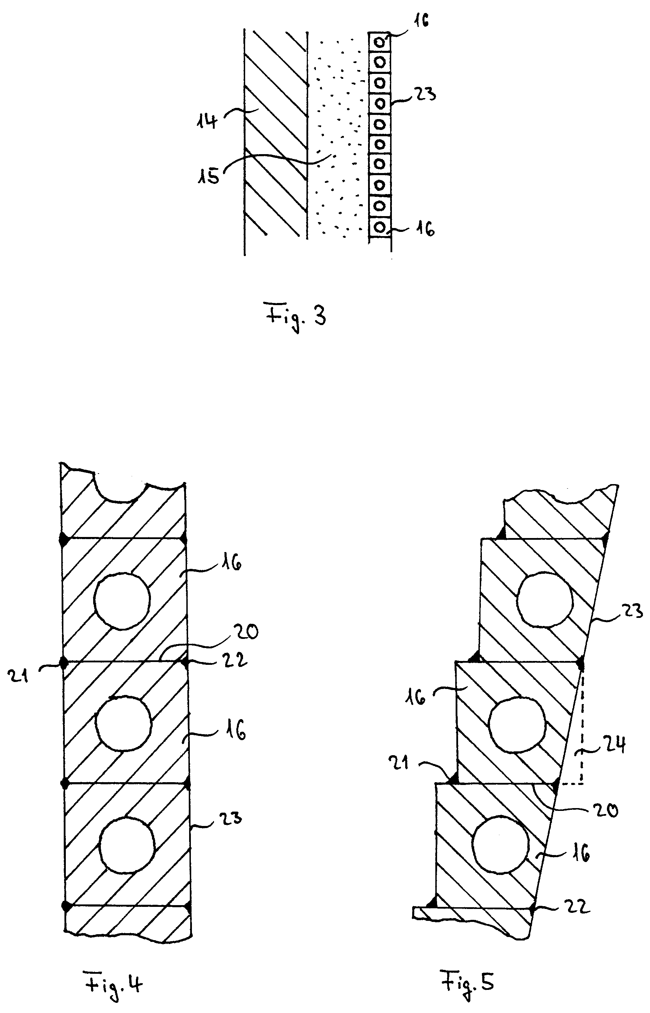

Fig. 2 zeigt im einzelnen den Druckreaktor 9 mit einem zylinderischen, an seinem Ende konisch zulaufenden Reaktionsraum. Der Reaktor besteht aus dem eigentlichen Druckbehälter 14, einer inneren feuerfesten Auskleidung 15 und einer innen umlaufenden, zylinderischen Wicklung von Vierkantrohren 16 als Heizmantel 19, wobei die Wicklung der Rohre 16 in der Ebene senkrecht zur Strömungsrichtung (Pfeile) vorgenommen ist.

Der Heizmantel 19 ist in mehrere Segmente 17 unterteilt, die jeweils einen bestimmten Abschnitt des Reaktors 9 mit Heizenergie versorgen. Jedes der Segmente 17 verfügt über einen eigenen Heizmitteleintritt 8a und -austritt 8b, deren Stutzen entweder in der Nähe des jeweiligen Segments in der Reaktorwandung vorgesehen sind, oder aber in den Endbereichen des Reaktors, beispielsweise in einer Kopfplatte 18 in der Nähe des Substrataustritts.

Der Reaktor 9 weist die üblichen Einrichtungen zur Überwachung der Betriebsparameter auf.

Fig. 3 zeigt einen vergrößerten Teil der Reaktorwandung mit dem eigentlichen Druckbehälter 14, der auf der Innenseite aufgebrachten feuerfesten Auskleidung und Dämmung 15 und dem darauf angeordneten Heizmantel 19 aus zylinderisch gewickelten Vierkantrohren 16.

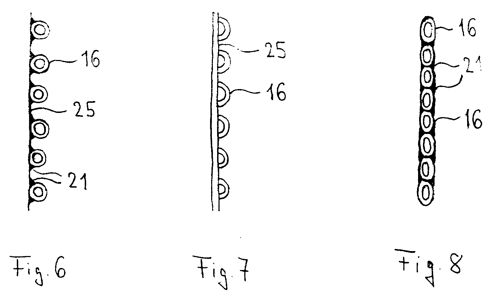

Fig. 4 zeigt im Detail die Verbindung der Vierkantrohre 16 im daraus gewickelten zylinderischen Heizmantel 19. Die Rohre sind mit den Seiten 20 aneinandergelegt und entlang der Kanten durch Schweißpunkte oder -nähte miteinander verbunden. Zweckmäßigerweise ist die Verbindung gasdurchlässig dergestalt, daß der Innendruck des Reaktors 9 auf die Reaktorwandung 14 weitergegeben werden kann, so daß der Heizmantel 19 als solcher nicht druckbeständig zu sein braucht. Natürlich müssen die einzelnen Vierkantrohre 16 selbst dem im Reaktor herrschenden Innendruck von bis zu 500 bar standhalten.

Die der Reaktorinnenseite zugewandte Seite 23 des Heizmantels 19 sind geglättet und poliert, einschließlich der dort zwischen den Rohren angeordneten Schweißpunkte oder -nähte 22. Dies braucht bei den äußeren, der Reaktorwand 14 und Auskleidung 15 zugewandten Schweißpunkten oder -nähten 21 nicht der Fall zu sein.

Fig. 5 zeigt im Detail die Verbindung von versetzt mit den Seiten 20 aneinandergelegten Vierkantrohren 16, deren der Reaktorinnenseite zugewandte Seiten 23 angeschrägt sind, um eine Anpassung an beispielsweise den konischen Endbereich des Reaktors zu ermöglichen, wie in Fig. 2 dargestellt. Erforderlich ist hierfür eine ausreichende Wandstärke des Rohrs 16, die es erlaubt, einen Teilbereich der Wand abzutragen, ohne die Druckbeständigkeit des einzelnen Rohres 16 in Frage zu stellen.

Fig. 6 zeigt einen Heizmantel aus auf eine Innenwand 25 geschweißten Rundrohren 16, wobei die Innenwand 25 vorzugsweise druckdurchlässig gestaltet ist. In Fig. 7 ist ein Heizmantel aus auf eine Innenwand 25 geschweißten oder zu einer Innenwand 25 verbundenen Halbschalenrohren 16 dargestellt, die ebenfalls vorzugsweise druckdurchlässig ausgebildet ist.

Fig. 8 zeigt einen Heizmantel aus miteinander verschweißten Ovalrohren 16.

Die erfindungsgemäße Reaktorkonstruktion mit einem Heizmantel aus entlang der Innenwandung verlaufenden Rohren ist besonders auch für die Verwendung einer Salzschmelze als Heizmedium geeignet. Eine solche Salzschmelze bringt in Verbindung mit einem solchen Heizmantel einen guten Wärmeübergang mit sich. Zugleich wirkt der zylinderische Heizmantel stabilisierend auf den Reaktor, ist druckunempfindlich und korrosionsbeständig. Die Anordnung auf der Innenseite der feuerfesten Ausmauerung verhindert eine exzessive Wärmeabgabe an die eigentliche Reaktorwand.

## Patentansprüche

1. Reaktor zur Durchführung endothermer oder schwach exothermer Reaktionen, insbesondere zur Behandlung von kontaminierten flüssigen, verflüssigbaren und/oder festen Kohlenwasserstoffen und Kohlenwasserstoffverbindungen mit Wasserstoff, mit wenigstens einer Zuführung für zu behandelndes Substrat (5), wasserstoffhaltiges Reagenz (7) und ggf. Katalysator, einem Druckbehälter (14), Einrichtungen zum Beheizen (8) und zur Überwachung der Betriebsparameter sowie eine Ableitung für behandeltes Substrat (10), dadurch gekennzeichnet, daß die Innenwandung des Druckbehälters (14) zumindest teilweise aus zu einem Heizmantel (19) miteinander verbundenen Rohren (16) besteht, der wenigstens einen Eintritt (8a) und wenigstens einen Austritt (8b) für ein Heizmedium aufweist.

2. Reaktor nach Anspruch 1, dadurch gekennzeichnet, daß der Heizmantel (19) aus einer aufgewickelten Rohrschlange besteht.

3. Reaktor nach Anspruch 1 oder 2, gekennzeichnet durch mehrere Zu- (8a) und Ableitungen (8b) für das Heizmedium zur segmentweisen Beheizung.

4. Reaktor nach einem der vorstehenden Ansprüche, dadurch gekennzeichnet, daß die Rohre (16) längs aneinandergelegt und über Schweißpunkte (21, 22) miteinander verbunden sind.

5. Reaktor nach Anspruch 4, dadurch gekennzeichnet, daß die Innenwandung (23) des Heizmantels (19) poliert ist.

6. Reaktor nach einem der vorstehenden Ansprüche, dadurch gekennzeichnet, daß das Heizmedium eine Salzschmelze ist.

7. Reaktor nach einem der vorstehenden Ansprüche, dadurch gekennzeichnet, daß der Heizmantel auf eine Betriebstemperatur von 350 bis 600° C und einen Außendruck von bis zu 500 bar ausgelegt ist.

8. Reaktor nach einem der vorstehenden Ansprüche, dadurch gekennzeichnet, daß die Rohre (16) zu einer Heizschlange aufgewickelt sind, die in einer Ebene senkrecht zur Strömungsrichtung des Substrats im Reaktor verläuft.

9. Reaktor nach einem der vorstehenden Ansprüche, dadurch gekennzeichnet, daß die Rohre (16) Vierkantrohre sind.

10. Reaktor nach Anspruch 9, dadurch gekennzeichnet, daß die Rohre (16) zur Anpassung an die Endbereiche des Druckbehälters (9) gestuft angeordnet und zur Reaktorinnenseite hin mit einer geglätteten Oberfläche versehen sind.

11. Reaktor nach einem vorstehenden Anspruch, dadurch gekennzeichnet, daß der Druckbehälter (9) aus einer druckbeständigen Reaktorwand (14), einer innen aufgebrachten feuerfesten Auskleidung (15) und, auf der feuerfesten Auskleidung (15), dem Heizmantel (19) aus Rohren (16) besteht, wobei der Heizmantel (19) so angelegt ist, daß der Betriebsdruck des Reaktors auf der Reaktorwand (14) lastet.
